# DEMANDE DE BREVET EUROPEEN

(11) **EP 1 336 476 A1**
(43) Date de publication de la demande: **20.08.2003**
(21) Numéro de dépôt: 03290362.7
(22) Date de dépôt: 14.02.2003
(51) Int. Cl.: B32B 27/32, B32B 7/12, B32B 31/00, E04F 15/10

(54) **Revêtement imprimé à base de deux couches polyoléfiniques**

(30) Priorité: 15.02.2002 FR 0201951
(71) Demandeur: Pennel Industries S.A., 59100 Roubaix (FR)
(72) Inventeur: Roussel, Marcel Résidence Le Moulin de Barbieux, 59100 Roubaix (FR); Cosials, Nathalie, 59290 Wasquehal (FR)
(74) Mandataire: Kling, Simone

(57) **Abrégé**

La présente invention concerne un revêtement imprimé caractérisé en ce qu'il comprend au moins une première couche à base d'au moins un composant thermoplastique oléfinique et/ou élastomère polyoléfinique formant support et présentant sur une de ses faces des motifs imprimés, une seconde couche à base d'au moins un composant thermoplastique oléfinique et/ou élastomère polyoléfinique appliquée en surface de la face imprimée de ladite première couche, le couplage entre les deux couches étant assuré par un promoteur d'adhérence appliquée en couche intermédiaire.

Elle concerne également un procédé pour sa préparation.

L'invention s'applique plus particulièrement à la fabrication de revêtements de sol.

## Description

La présente invention concerne un revêtement imprimé comprenant au moins deux couches de nature polyoléfinique ainsi qu'un procédé pour sa préparation.

Plus précisément, l'objectif principal de la présente invention est de fournir un revêtement pouvant présenter des motifs ou décors imprimés et utilisable notamment dans le domaine de l'automobile et du bâtiment à titre de revêtement de sol.

En l'occurrence, le revêtement imprimé revendiqué est caractérisé en ce qu'il comprend au moins une première couche à base d'au moins un composant thermoplastique oléfinique et/ou élastomère polyoléfinique, formant support et présentant sur une de ses faces des motifs imprimés, une seconde couche translucide à base d'au moins un composant thermoplastique oléfinique et/ou élastomère polyoléfinique appliquée en surface de la face imprimée de ladite première couche, le couplage entre les deux couches étant assuré par au moins un promoteur d'adhérence appliqué en couche intermédiaire.

Le revêtement imprimé selon l'invention est décrit plus en détail ci-après.

Selon l'invention, par « imprimé» on entend désigner des motifs ou décors disposés à la surface de la couche dite support, de manière discontinue et variée, généralement à l'aide d'encres de type vinylique et/ou acrylique et/ou polyuréthane modifié, par opposition à une coloration homogène dans la masse conduisant à des matériaux colorés de façon relativement uniforme.

Les inventeurs ont constaté qu'en appliquant une seconde couche à base de composants polyoléfiniques en surface de la face imprimée de la couche support, il s'avérait possible de renforcer significativement la résistance mécanique et temporelle des motifs ou décors exposés en surface. Le revêtement revendiqué s'avère ainsi notamment compatible avec les tests d'abrasions standards requis par les constructeurs automobiles et du bâtiment. A notamment ainsi été surmonté la difficulté de faire adhérer deux couches de natures chimiques identiques, à savoir polyoléfinique dans le cas présent, sachant qu'une impression, de nature chimique différente, est déposée en surface de la couche inférieure avant doublage.

Outre cet avantage en terme d'usure, le revêtement correspondant s'avère particulièrement intéressant en terme de recyclabilité. En l'occurrence, dans la mesure où la sur-couche, dite encore d'usure, est également de nature polyoléfinique, ledit revêtement présente avantageusement une homogénéité de composition et est donc totalement recyclable.

Par « composant thermoplastique oléfinique », on désigne conformément à l'invention un polymère ou copolymère thermoplastique oléfinique (TPO) ou un de leurs mélanges. Il peut notamment s'agir de polyéthylène, polypropylène, un de leurs mélanges ou copolymères.

Selon l'invention, le composant polyoléfinique présente une dureté shore A allant de 50 à 90, de préférence 80 shore A.

Par « élastomère polyoléfinique » on entend couvrir au sens de l'invention les élastomères de types EPDM (monomère éthylène-propylène-diène), les élastomères polyoléfiniques de type POE (copolymère d'éthylène et d'une alpha oléfine comme l'octène) et les élastomères de type SEBS (terpolymère styrène-ethylène-butylène-styrène). Il s'agit de préférence d'un élastomère de type EPDM.

Lesdites première et seconde couches sont de préférence de même composition.

Plus préférentiellement, elles comprennent à titre de composant(s) thermoplastique(s) oléfinique(s) et/ou élastomère(s) polyoléfinique(s) :
- 5 à 95 % et de préférence 50 à 80 % d'un EPDM,
- 0 à 50% et de préférence 10 à 40 % d'un copolymère du propylène et
- 0 à 50 % et de préférence 5 à 25 % d'un polypropylène.

Ces couches polyoléfiniques peuvent par ailleurs contenir divers additifs notamment pour améliorer / modifier les propriétés mécaniques du revêtement imprimé final, sa résistance aux U.V., etc., tels que des plastifiants, agent de protection vis-à-vis des U.V....

La composition de ces couches est typiquement telle qu'indiquée ci-dessous :

| COMPOSANTS | % pondéraux |
|---|---|
| EPDM | 63 |
| Copolymère de propylène | 29 |
| Polypropylène | 4 |
| Additifs | 4 |

Selon une variante préférée de l'invention, la face de la couche support subit préalablement à la fixation des motifs imprimés un traitement de surface de celle-ci. Ce type de traitement est décrit plus en détail ci-après.

Généralement la couche support possède une épaisseur comprise entre 0,1 et 0,5 mm et de préférence entre 0,2 et 0,35 mm.

Pour ce qui est de la sur-couche translucide son épaisseur varie entre 0,1 et 0,3 mm et de préférence entre 0,15 et 0,25 mm. En l'occurrence, son épaisseur est généralement ajustée de manière à obtenir un compromis entre une résistance mécanique suffisante et une transparence satisfaisante.

En ce qui concerne le promoteur d'adhérence, il a pour fonction principal d'agir en tant qu'agent de couplage entre les pigments d'encre composant les décors imprimés déposés sur la première couche polyoléfinique et les composants polyoléfiniques de la couche supérieure. Il doit bien entendu également posséder une cohésion interne suffisante, notamment un bon allongement à chaud afin de satisfaire une bonne transformation du produit.

Conviennent notamment à l'invention comme promoteur d'adhérence, des solutions à base de polyoléfines, de polyoléfines chlorées, de polyoléfines chlorées fonctionnalisées hydroxy et réticulables par des isocyanates, de polyoléfines chlorées fonctionnalisées anhydride maléique ou époxy et réticulables par des aminés, des solutions à base d'acrylique, de polyesters réticulés avec des isocyanates et également des solutions à base de silanes. Selon une variante préférée, le promoteur comprend au moins une polyoléfine chlorée.

La résine est généralement utilisée entre 5% et 50% en solution dans le solvant (toluène, xylène, méthyle-éthyle-cétone, eau dans le cas de solution aqueuse).

Dans le cas de résines réticulables, le réticulant est utilisé à des taux variant de 1% à 10%.

A titre illustratif, cette résine peut être formulée comme suit :
- 15% d'une polyoléfine chlorée,
- 85% de Toluène.

Ce promoteur est appliqué sur la face inférieure de la couche polyoléfinique supérieure par rotogravure ou héliogravure (cylindre mille points) ou encore par pulvérisation.

Selon un mode de réalisation spécifique de l'invention, la couche translucide est à son tour revêtue d'un vernis.

Ce vernis est avantageux pour l'homogénéité d'aspect final du revêtement. Il s'agit généralement d'un vernis à base d'au moins une résine acrylique ou polyuréthanne et/ou mixte comme, par exemple, une résine vinylique/polyuréthanne. Selon l'effet désiré, le vernis de protection peut être incolore ou coloré mais demeure translucide pour laisser apparaître le ou les motif(s) imprimé(s). Des additifs « anti-tache » de type connu peuvent être introduits par exemple dans le vernis final de protection pour augmenter le pouvoir anti-tache du revêtement final.

Ce vernis peut être appliqué par pulvérisation, imprégnation à l'aide d'un rouleau par exemple ou par la technique d'héliogravure.

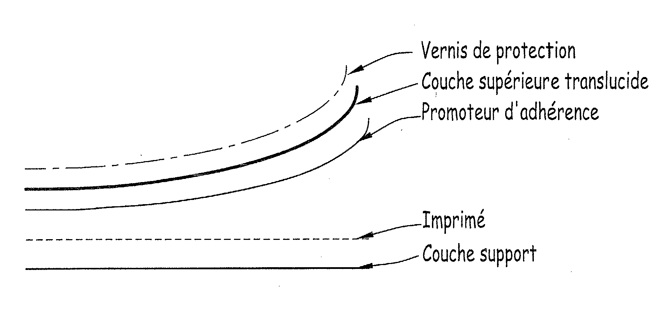

En figure 1 est représentée une coupe transversale d'un revêtement conforme à l'invention.

La présente invention a également pour objet un procédé de préparation d'un revêtement imprimé conforme à l'invention caractérisé en ce que l'on procède, dans un ordre quelconque pour ce qui est des étapes 1 et 2 à :
1- la préparation d'une première couche formant support à partir d'au moins un composant thermoplastique oléfinique et/ou élastomère polyoléfinique ;
2- la préparation d'une seconde couche, dite couche translucide, à partir d'au moins un composant thermoplastique oléfinique et/ou élastomère polyoléfinique ;
3- le cas échéant, la réalisation sur ladite couche support d'un traitement de surface ;
4- l'impression d'un ou des motif(s) ou décor(s) sur la face, traitée éventuellement comme ci-dessus, de ladite couche support ;
5- le dépôt sur la face inférieure de ladite couche translucide d'au moins un promoteur d'adhérence ;
6- l'assemblage de la première et seconde couches, et
7- le dépôt éventuel d'un vernis de protection à la surface de la couche translucide.

Avantageusement les compositions des couches dites de support et d'usure sont compatibles avec une application par calandrage ou extrusion. En ce qui concerne le mode d'application dit par extrusion, il comprend le mélange mécanique des différents constituants. Ce mélange est réalisé dans une extrudeuse mono-vis ou bi-vis où le mélange est porté à une température de l'ordre de 200°C. Le mélange est ensuite passé à travers une filière plate disposée en sortie d'extrudeuse. L'agent ainsi formé est ensuite conformé en feuille par passage entre deux cylindres. La température du cylindre est maintenue entre 120 °C et 170°C.

Le mode d'application par calandrage, implique pour sa part le différent mélange de constituants de la composition précédente et leur fusion dans un mélangeur interne ouvert par exemple de type Inthermix®. Le mélange est ensuite filtré à l'aide d'une boudineuse-filtreuse préalablement à son calandrage.

Selon une variante préférée de l'invention, les deux couches sont formées par calandrage.

Pour réaliser l'impression de motifs sur la couche support polyoléfinique précitée, on effectue de préférence un traitement de surface afin de faciliter l'accrochage et l'adhérence des impressions ultérieures.

A cet effet, on peut réaliser un traitement électrique pour rendre polaire la surface d'impression de la couche support.

Ensuite, on réalise l'impression proprement dite des motifs souhaités, de préférence par héliogravure, sur la surface ainsi préparée.

La technique d'héliogravure est mise en oeuvre de manière classique, généralement avec des encres de type acryliques et/ou vinyliques et/ou polyuréthanes éventuellement modifiés (agents de mouillabilité, agents matant , stabilisants, agents anti-blocking). Les motifs désirés peuvent être imprimés avec le matériel classiquement utilisé dans l'impression par héliogravure.

A l'issue de cette impression, on procède à l'application du promoteur d'adhérence sur la face inférieure de la sur-couche polyoléfinique par héliogravure. Sous-couche et sur-couche sont assemblées par laminage. Ce laminage est généralement réalisé à chaud entre deux cylindres. Cette opération est suivie par un refroidissement pour assurer une bonne planéité et un contrôle de l'épaisseur.

Comme précisé précédemment, cette sur-couche peut être revêtue à son tour d'un vernis.

L'invention concerne également des articles comprenant un revêtement imprimé tel que précité. Elle s'applique plus particulièrement à la fabrication de revêtements de sol notamment dans les domaines de l'automobile et du bâtiment.

L'invention va maintenant être illustrée à l'aide d'un exemple qui ne doit pas être considéré comme limitatif.

### EXEMPLE

Les différentes phases de production d'un revêtement imprimé sont les suivantes :
1) Obtention d'une couche support de type film polyoléfinique opaque (d'épaisseur 0,26mm) par calandrage (25 mètres par minute) selon le protocole suivant :
   - Mélangeage dans inthermix: 200°C,
   - Passage de la matière fondue dans une boudineuse filtreuse : 180°C
   - Calandrage, Températures : cylindre 1=160°C, cylindre 2=150°C, cylindre 3=140°C.
   Composition du mélange, % en poids :
   - Elastomère oléfinique type EPDM, 62%
   - Copolymère du propylène , 29%
   - Propylène homopolymère, 4.5%
   - Mélange maître composé d'une résine à base de polyéthylène fortement concentrée en colorant assurant la coloration dans la masse : 4,5%
2) Traitement de l'une des faces de cette couche support en vue de l'impression consécutive :
   - Traitement "Corona®" en fin de ligne de calandrage. Ce traitement électrique en surface de la feuille à pour but d'augmenter la tension superficielle en surface et de ce fait la mouillabilité.
3) Impression par héliogravure de motifs imprimés avec une encre de type acrylique-vinylique sur la face de la couche support traitée comme précédemment.
   - Quantité du dépôt : 10g humide,
   - Vitesse : 15 mètres par minute,
   - Séchage : quelques secondes à 150°C.
4) Calandrage de la sur-couche de protection translucide :
   - Selon le mode opératoire : proposé pour la couche support mais avec une épaisseur de 0,24mm,
   - composition du mélange identique à celui utilisé pour la couche support mais sans le mélange maître.
5) Dépôt par héliogravure du primaire d'adhérence sur la face inférieure de la sur-couche translucide de protection :
   - Quantité du dépôt : 10g humide,
   - Vitesse : 15 mètres/minute,
   - Séchage : quelques secondes à 100°C.
6) Assemblage des deux couches par laminage à chaud entre deux cylindres :
   - Température : 170°C,
   - Vitesse : 8 mètres/minute.
7) Vernissage de la face supérieure du revêtement de sol ainsi obtenu par héliogravure à l'aide d'un vernis de type polyuréthanne :
   - Quantité du dépôt : 40g humide,
   - Vitesse : 15 mètres par minutes,
   Chauffage : quelques secondes à 150°C.

## Revendications

1. Revêtement imprimé **caractérisé en ce qu'**il comprend au moins une première couche à base d'au moins un composant themoplastique oléfinique et/ou élastomère polyoléfinique formant support et présentant sur une de ses faces des motifs imprimés, une seconde couche translucide à base d'au moins un composant thermoplastique oléfinique et/ou élastomère polyoléfinique appliquée en surface de la face imprimée de ladite première couche, le couplage entre les deux couches étant assuré par au moins un promoteur d'adhérence appliqué en couche intermédiaire.

2. Revêtement imprimé selon la revendication 1, **caractérisé en ce que** le composant thermoplastique oléfinique présente une dureté shore A comprise entre 50 et 90, de préférence de 80 shore A.

3. Revêtement imprimé selon la revendication 1 ou 2, **caractérisé en ce que** le composant thermoplastique oléfinique comprend au moins un polymère ou copolymère thermoplastique (TPO) oléfinique ou un de leurs mélanges.

4. Revêtement imprimé selon l'une quelconque des revendications 1 à 3, **caractérisé en ce que** l'élastomère polyoléfinique est choisi parmi les élastomères de types EPDM (monomère éthylène-propylène-diène), les élastomères polyoléfiniques de type POE (copolymère d'éthylène et d'une alpha oléfine comme l'octène) et les élastomères de type SEBS (terpolymère styrène-ethylène-butylène-styrène).

5. Revêtement imprimé selon l'une quelconque des revendications 1 à 4, **caractérisé en ce que** les première et seconde couches sont de même composition.

6. Revêtement selon l'une des revendications 1 à 5 **caractérisé en ce que** les première et seconde couches sont à base de
- 5 à 95 % d'un EPDM,
- 0 à 50% d'un copolymère du propylène et
- 0 à 50 % de polypropylène.

7. Revêtement imprimé selon l'une quelconque des revendications 1 à 6, **caractérisé en ce que** le promoteur d'adhérence est choisi parmi des solutions à base de polyoléfines, de polyoléfines chlorées, de polyoléfines chlorées fonctionnalisées hydroxy et réticulables par des isocyanates, de polyoléfines chlorées fonctionnalisées anhydride maléique ou époxy et réticulables par des amines, des solutions à base d'acrylique, de polyesters réticulés avec des isocyanates et des solutions à base de silanes.

8. Revêtement imprimé selon l'une quelconque des revendications précédentes **caractérisé en ce que** le promoteur d'adhérence comprend au moins une polyoléfine chlorée.

9. Revêtement imprimé selon l'une quelconque des revendications 1 à 8, **caractérisé en ce que** les motifs imprimés sont fixés en surface d'une des faces de ladite première couche après traitement de surface de ladite face.

10. Revêtement imprimé selon l'une quelconque des revendications 1 à 9, **caractérisé en ce qu'**il est muni en outre d'un vernis de protection appliqué sur la seconde couche translucide.

11. Procédé pour la préparation d'un revêtement imprimé tel que défini selon l'une quelconque des revendications 1 à 10, **caractérisé en ce que** l'on procède, dans un ordre quelconque pour ce qui est des étapes 1 et 2 :
1- la préparation d'une première couche formant support à partir d'au moins un composant thermoplastique oléfinique et/ou élastomère polyoléfinique ;
2- la préparation d'une seconde couche, dite couche translucide, à partir d'au moins un composant thermoplastique oléfinique et/ou élastomère polyoléfinique ;
3- le cas échéant, la réalisation sur ladite couche support d'un traitement de surface ;
4- l'impression d'un ou des motif(s) ou décor(s) sur la face, traitée éventuellement comme ci-dessus, de ladite couche support ;
5- le dépôt sur la face inférieure de ladite couche translucide d'au moins un promoteur d'adhérence ;
6- l'assemblage de la première et seconde couches, et
7- le dépôt éventuel d'un vernis de protection à la surface de la couche translucide.

12. Procédé selon la revendication 11, **caractérisé en ce que** les couches sont telles que définies selon l'une quelconque des revendications 2 à 7.

13. Procédé selon la revendication 11 ou 12, **caractérisé en ce que** la première couche est formée par calandrage.

14. Procédé selon l'une quelconque des revendications 11 à 13 **caractérisé en ce que** la seconde couche est formée par calandrage.

15. Procédé selon l'une quelconque des revendications 11 à 14, **caractérisé en ce que** le promoteur d'adhérence est tel que défini en revendication 8.

16. Procédé selon l'une quelconque des revendications 11 à 15, **caractérisé en ce que** le promoteur d'adhérence est appliqué par héliogravure.

17. Procédé selon l'une quelconque des revendications 11 à 16, **caractérisé en ce que** le traitement de surface comprend un traitement électrique .

18. Procédé selon l'une quelconque des revendications 11 à 17, **caractérisé en ce que** l'impression des motifs et/ou décors est réalisée par héliogravure.

19. Articles comprenant un revêtement imprimé selon l'une quelconque des revendications 1 à 10.

20. Articles selon la revendication 19, consistant en un revêtement de sol.
